Europäisches Patentamt

European Patent Office

Office européen des brevets

(11) Veröffentlichungsnummer: **0 411 378 A2**

# EUROPÄISCHE PATENTANMELDUNG

(21) Anmeldenummer: **90113586.3**

(22) Anmeldetag: **16.07.90**

(51) Int. Cl.⁵: **H04M 3/50**, H04M 1/00

(30) Priorität: **01.08.89 DE 3925479**

(43) Veröffentlichungstag der Anmeldung:
**06.02.91 Patentblatt 91/06**

(84) Benannte Vertragsstaaten:
**AT BE CH DE GB IT LI**

(71) Anmelder: **Siemens Aktiengesellschaft**
**Wittelsbacherplatz 2**
**D-8000 München 2(DE)**

(72) Erfinder: **Erben, Bernhard**
**Stiftsbogen 45**
**D-8000 München 70(DE)**

(54) **Verfahren zur Erzeugung eines für die Einstellung bestimmter Zustände in einem sekundären Steuerkreis eines analogen Fernsprechendgerätes dienenden Signals.**

(57) Entweder durch eine automatische Aufforderung (Voice Mail System) oder durch einen Bedienerauftrag wird für ein bestimmtes Fernsprechendgerät durch einen zentralen MFV-Wahlsender ein festgelegtes Zeichen kurzzeitig ausgesendet. Dieses Zeichen wird in der Auswerteeinrichtung im Fernsprechendgerät erkannt und nach der Decodierung in ein Signal umgewandelt, das zur Ansteuerung eines sekundären Steuerkreises dient. Um das Leistungsmerkmal "message waiting" anzeigen zu können, wird in einem solchen Fall ein Leuchtelement (lichtemittierende Diode Led) über eine Speicherschaltung (bistabile Kippstufe BK1) durch ein dadurch aus dem kurzzeitigen MfV-signal erzeugten dauerhaften Signal angesteuert.

## VERFAHREN ZUR ERZEUGUNG EINES FÜR DIE EINSTELLUNG BESTIMMTER ZUSTÄNDE IN EINEM SEKUN-DÄREN STEUERKREIS EINES ANALOGEN FERNSPRECHENDGERÄTES DIENENDEN SIGNALS

Die Erfindung betrifft ein Verfahren zur Erzeugung eines für die Einstellung bestimmter Zustände in einem sekundären Steuerkreis eines analogen Fernsprechendgerätes dienenden Signals, wobei das Fernsprechendgerät über eine Teilnehmeranschlußleitung an eine entsprechende Teilnehmeranschlußeinheit eines programmgesteuerten Fernsprechnebenstellensystems angeschlossen ist und durch die Programmsteuerung eine für die Bildung von auszusendenden Mehrfrequenzcode-Zeichen zentral vorgesehene Mehrfrequenzcode-Zeichensendeeinheit aktivierbar ist.

Neuzeitliche Fernsprechnebenstellensysteme sind nicht nur zur eigentlichen Vermittlungssteuerung, sondern auch zu einer Steuerung bzw. Realisierung zusätzlicher, über den Vermittlungsvorgang hinausgehender Steuervorgänge befähigt. Solche zusätzlichen Funktionen werden im allgemeinen als Leistungsmerkmale bezeichnet, wobei eine große Anzahl unterschiedlichster Leistungsmerkmale bekannt ist. Die in Nebenstellensystemen eingesetzten überwiegend digitalen rechnergesteuerten Vermittlungseinrichtungen lassen auch den Einsatz von unterschiedlichen Sprachendgeräten zu. Diese können sich also in ihrer Anschlußart und gegebenenfalls auch in den ihnen zugrundeliegenden Wahlverfahren unterscheiden. So dienen beispielsweise digitale Teilnehmeranschlußbaugruppen dem Anschluß von digitalen Sprachendgeräten und es werden zum Anschluß von analogen Sprachendgeräten entsprechende analoge Teilnehmeranschlußbaugruppen eingesetzt. Digitale Sprachendgeräte weisen in der Regel ein Display auf, über das einem Teilnehmer gesprächsbegleitend oder auch im Ruhezustand des jeweiligen Endgerätes bestimmte Informationen als Textdarstellung angezeigt werden können.

Für angeschlossene analoge Fernsprechendgeräte, die kein Display aufweisen, ist es bekannt, dem Teilnehmer eine vorab definierte bestimmte Information dadurch zu übermitteln, daß ein am Fernsprechendgerät vorhandenes Leuchtelement aktiviert wird. Durch eine solche optische Signalisierung kann durch einen entsprechenden Bedienerauftrag ein Fernsprechteilnehmer darüber informiert werden, daß beispielsweise an der Rezeption eines Hotels eine Nachricht für ihn vorliegt ("message waiting"-Anzeige). Um einem Teilnehmer eines Nebenstellensystems durch ein optisches Aufmerksamkeitssignal eine bestimmte Information zu übermitteln, ist es bekannt, durch einen kurzen spannungsmäßig überhöhten Rufimpuls eine am Fernsprechendgerät angebrachte Glimmlampe zu zünden. Die weitere Aktivierung der Glimmlampe erfolgt dann durch den Schleifenstrom. Eine andere Möglichkeit besteht darin, ein Leuchtelement dadurch zu aktivieren, daß für das Endgerät eine bestimmte Anzahl von Ruftakten, die jedoch noch nicht zur Auslösung eines Rufsignals führen, übertragen werden. Die durch die Systemsteuerung hierzu notwendige Beeinflussung des Rufgenerators ist verhältnismäßig aufwendig und ebenso wie für die vorab genannten Lösungen störungsanfällig. Eine weitere Möglichkeit, dieses Leistungsmerkmal, das also auch im Ruhezustand des Fernsprechendgerätes eine Information für den Teilnehmer zuläßt, zu realisieren, besteht in der Anwendung einer zusätzlichen Baueinheit, für die ein eigenes Leitungssystem vorzusehen ist. Über dieses Leitungssystem wird dann eine Lampe geschaltet.

Es ist die Aufgabe der Erfindung, für ein rechnergesteuertes Fernsprechnebenstellensystem in einfacher Weise zentral ein nicht störungsanfälliges Signal zu erzeugen, mit dem bestimmte Zustände in einem sekundären Steuerkreis eines analogen Fernsprechendgerätes bewirkt werden. Dies wird erfindungsgemäß dadurch erreicht, daß zur Übermittlung einer Information mit vereinbarungsgemäß festgelegtem Inhalt entweder automatisch im Zusammenhang mit einer vorbestimmten vermittlungstechnischen Situation oder aufgrund der an einem Fernsprechendgerät vermittels einer bestimmten Prozedur vorgenommenen Informationseingabe durch die Programmsteuerung die kurzfristige Anschaltung eines im Mehrfrequenzcode-Verfahren gebildeten MFV-Zeichens zur Übertragung an ein dabei ausgewähltes analoges Fernsprechendgerät - unabhängig von dessen jeweiligem Betriebszustand - an die diesem zugehörige Teilnehmeranschlußleitung veranlaßt wird, daß in diesem Fernsprechendgerät das MFV-Zeichen vermittels einer ihr zugehörigen Auswerteeinrichtung erkannt und in ein zur Ansteuerung eines sekundären sprachunabhängigen Steuerkreises geeignetes Signal umgewandelt wird.

Für die Übertragung der vermittels der Tastatur an einem Fernsprechendgerät einzugebenden Informationen an das System wird das Mehrfrequenzcode-Wahlverfahren benutzt. Ein auszusendendes Zeichen wird dabei z. B. durch die Kombination einer Frequenz aus einer ersten und einer bestimmten Frequenz aus einer zweiten Frequenz-Gruppe dargestellt. Die so ausgesendeten Zeichen werden durch im System vorhandenen Empfänger ausgewertet und das Ergebnis der Zentralsteuerung zur weiteren Verarbeitung übergeben. Ist die betreffende Wahlinformation für eine Endeinrichtung eines öffentlichen Netzes oder eines weiteren privaten Netzes - Unteranlagen, Querverbindungsleitungen - bestimmt, so wird der zentral im System vorhandene MFV-Wahlsender durch die Zentralsteuerung veranlaßt, die entsprechenden MFV-Zeichen an die betreffenden weiterführenden Leitungen über die zugehörigen Leitungsanschlußbaugruppen abzugeben. Erfindungsgemäß wird nun dieser im System zentral vorhandene MFV-Wahlsender auch dazu benutzt, im Bedarfsfalle ein kurzzeitiges MFV-Zeichen über die Teilnehmeranschlußleitung zu jeweils einem der an dieses System angeschlossenen Fernsprechendgeräte zu senden. Eine in diesem Fernsprechendgerät vorhandene einfache Auswerteeinrichtung wertet dann - unabhängig von einem bestehenden Sprechkreis - dieses zum Fernsprechendgerät gesendete Zeichen aus und veranlaßt die Aktivierung eines in einem entsprechenden Steuerkreis angeordneten Elementes. Es sind dadurch über die Teilnehmeranschlußleitung unterschiedlichste Steuerungsfunktionen auslösbar. So können beispielsweise damit bestimmte Geräte bzw. Steuerungsanlagen ferngesteuert ein- bzw. ausgeschaltet werden. Für die Anschaltung des MFV-Wahlsenders zu diesem speziellen erfindungs gemäßen Zweck sind Programmanteile mitheranzuziehen, die für die Ansteuerung eines Displays an digitalen Fernsprechendgeräten sowieso vorgesehen sind.

In einfacher Weise kann gemäß einer Weiterbildung der Erfindung durch das ausgesendete MFV-Zeichen nach der Umwandlung in ein dauerhaft zur Verfügung stehendes Signal in dem betreffenden Fernsprechendgerät ein optisches Aufmerksamkeitssignal durch Aktivierung eines entsprechenden Leuchtelementes erzeugt werden. Damit könnte beispielsweise der Teilnehmer daraufhingewiesen werden, daß z. B. in der ihm zugeordneten Box eines Sprachinformationssystems eine Nachricht hinterlegt ist. In einem solchen Fall würde dann eine automatische Aussendung des MFV-Zeichens erfolgen. Das optische Aufmerksamkeitssignal kann auch durch einen Bedienerauftrag ausgelöst werden. Es kann beispielsweise ein Hotelgast durch das optische Aufmerksamkeitssignal darüber informiert werden, daß für ihn an der Rezeption eine Nachricht hinterlegt wurde. Das Aufmerksamkeitssignal kann durch ein gleichfalls mit einem solchen Auftrag auszusendendes anderes MFV-Zeichen zurückgenommen werden.

In einfacher Weise wird das für die Ansteuerung des Leuchtelementes zur Verfügung stehende Signal durch das Ausgangssignal einer mit dem empfangenen MFV-Zeichen aktivierten bistabilen Stufe erzeugt. Um nun die Signalwirkung des optischen Aufmerksamkeitszeichen zu erhöhen, kann die bistabile Stufe ausgangsseitig das Leuchtelement unter Zwischenschaltung einer das Blinken des Leuchtelementes ermöglichenden Einheit steuern. Als Leuchtelement kann erfindungsgemäß in einfacher Weise eine unmittelbar am Fernsprechendgerät installierte lichtemittierende Diode dienen.

Zur Übermittlung von unterschiedlichen Informationen wird ein ihnen jeweils zugeordnetes unterschiedliches MFV-Zeichen übertragen und jede der vorab festgelegten Informationen bewirkt einen bestimmten Leucht- und/oder Blinkzustand eines Leuchtelementes. Weitere vorteilhafte Ausgestaltungen der Erfindung sind den restlichen Unteransprüchen zu entnehmen.

Das erfindungsgemäße Verfahren wird nachstehend anhand einer Figur erläutert. Es sind lediglich die zum Verständnis der Erfindung notwendigen Teile dargestellt.

An das programmgesteuerte digitale Fernsprechnebenstellensystem NS sind über eine Anschlußbaugruppe SLMB digitale Fernsprechendgeräte De und über eine entsprechende analoge Teilnehmeranschlußbaugruppe SLMA analoge Fernsprechendgeräte angeschlossen, von denen stellvertretend das Fernsprechendgerät AE dargestellt ist. Das Fernsprechnebenstellensystem NS weist auch nicht weiter dargestellte Leitungsanschlußbaugruppen auf, an die als Anschlußschnittstelle analoge und digitale Leitungen mit den Verkehrsarten Amtsverkehr, Querverkehr sowie Haupt- und Unteranlagenverkehr angeschlossen sind. Es ist eine zentrale Steuereinheit ZST vorhanden, durch die sämtliche Steuerungsaufgaben des System übernommen werden. Sie greift auf die in den Programmspeichern PS enthaltenen Informationen zurück und steuert die über die digitale Koppeleinrichtung KF hergestellten Verbindungen.

Das Fernsprechnebenstellensystem enthält einen MFV-Wahlsender MZ, mit dem die im Mehrfrequenzcodeverfahren gebildeten Wählzeichen an nicht dargestellte abgehende Leitungen angelegt werden. Im Normalfall wird von der zentralen Steuereinrichtung ZST dieser MFV-Wahlsender MS immer dann aktiviert, wenn von Fernsprechendgeräten, denen das Mehrfrequenzcode-Wahlverfahren zugrundeliegt, entsprechende Informationen empfangen werden. Dieser vorhandene MFV-Wahlsender MZ wird nun erfindungsgemäß zusätzlich dafür eingesetzt, solche Mehrfrequenzcode-Zeichen zu den analogen Fernsprechendgeräten AE auszusenden. Im Ausführungsbeispielwird durch ein solches MFV-Zeichen durch Aktive-ren einer lichtemittierenden Diode Led ein optisches Aufmerksamkeitszeichen erzeugt. Diesem Aufmerksamkeitszeichen ist dann eine ganz bestimmte, für den Teilnehmer bekannte Bedeutung zugeordnet. Anstelle eines optischen Aufmerksamkeitszeichens könnten auch in einem entsprechend angepaßten Steuerkreis durch ein übermitteltes MFV-Zeichen beliebige andere Steuerfunktionen, wie beispielsweise das Ein- bzw. Ausschalten eines Gerätes oder einer anderen bestimmte Funktionen steuernden Einheit, bewirkt werden.

Die einem analogen Fernsprechendgerät AE zugehörige Teilnehmeranschlußleitung Ltg ist von der Teilnehmeranschlußbaugruppe SLMA zu einer Anschlußdose, beispielsweise einer Wandsteckdose An, des betreffenden Fernsprechendgerätes geführt. Von dort erfolgt die Verbindung zum eigentlichen Fernsprechendgerät über die Anschlußschnur AS. Neben den beiden Sprechadern a, b weist diese Anschlußschnur AS noch die innerhalb der Anschlußdose gebildeten zusätzlichen Adern w, e auf. Über diese zuletzt genannten Adern erfolgt z. B. die Stromversorgung für die im Fernsprechendgerät AE neben den darin üblicherweise enthaltenen Einheiten, die durch den Block Sp zusammengefaßt sein sollen, zusätzlich vorhandenen Einheiten. Die für diese zusätzlichen Einheiten notwendige Stromversorgung kann beispielsweise durch das Steckernetzteil N erfolgen. Durch die zu diesem Zweck zusätzlich ausgenutzten Adern w, e erübrigt sich dann der Einsatz eines eigenen Versorgungskabels. Es ist grundsätzlich auch denkbar, die im Fernsprechendgerät zusätzlich angeordneten Einheiten über die normale Apparatespeisung, d. h. über die Teilnehmeranschlußleitung aus dem Fernsprechnebenstellensystem zu versorgen.

In einem solchen Fall ist dann jedoch sicherzustellen, daß der gezogene Strom unter einem bestimmten Grenzwert bleibt, damit nicht fälschlicherweise ein Schleifenschluß durch die entsprechende Indikationsschaltung erkannt wird. Bei der Versorgung durch ein aus der Wechselspannungseinheit AC und der Gleichspannungseinheit DC bestehendes Steckernetzteil N dagegen kann die Helligkeit ,der im Ausführungsbeispiel angesteuerten Leuchtelemente in Form der lichtemittierenden Dioden Led innerhalb der durch das Bauelement vorgegebenen Grenzen beliebig gewählt werden.

Die Aussendung eines festgelegten MFV-Zeichens kann entweder automatisch oder durch einen Bedienerauftrag erfolgen. Eine automatische Aussendung kann beispielsweise durch ein dem Nebenstellensystem NS zugeordnetes - nicht weiter dargestelltes -Sprachinformationssystem aktiviert werden. Mit der Aussendung eines festgelegten MFV-Zeichens zu dem Fernsprechendgerät und mit der damit noch zu schildernden Aktivierung eines Leuchtelementes Led kann dem betreffenden Teilnehmer angezeigt werden, daß in der ihm zugeordneten Box des Sprachinformationssystems (Voice Mail System) eine Nachricht hinterlegt wurde.

Eine andere Möglichkeit besteht darin, durch einen Bedienerauftrag die Aussendung eines Zeichens zu veranlassen. Hierzu ist dann zur Realisierung eines bestimmten zentralen Dienstes, der beispielsweise über das Fernsprechsystem eines Hotels angeboten wird, durch eine Bedienperson, gegebenenfalls unter Beschränkung auf den zugehörigen Vermittlungsplatz, für jedes festgelegte auszusendende MFV-Zeichen neben der Rufnummer des anzusprechenden Teilnehmers ein für das Zeichen charakteristischer Ziffern- und/oder Steuerzeichencode einzugeben. Diese Informationen veranlassen dann die zentrale Steuerung ZST die MFV-Zeichensendeeinheit MZ zu aktivieren und das durch die eingegebene Codeinformation bestimmte MFV-Zeichen, das also beispielsweise aus dem Gemisch von zwei Tonfrequenzen besteht, auszusenden. Das jeweils vom analogen Fernsprechendgerät AE empfangene Zeichen wird in der Auswerteeinrichtung AW ausgewertet und führt dann zur Ansteuerung eines jeweils aus einer Speicherschaltung BK und einem Leuchtelement Led bestehenden Sekundärkreises. Mit dem Block Sp sind die üblicherweise in einem analogen Fernsprechendgerät enthaltenen Baueinheiten bezeichnet. Hierzu gehört beispielsweise der Lautsprecher und der Mikrophonkreis und das zur Ziffern- bzw. Zeicheneingabe vorhandene Organ.

Innerhalb der Auswerteeinrichtung AW wird das ankommende MFV-Zeichen über eine Schutzschaltung S einem MFV-Empfänger ME zugeführt. Die Schaltungseinheit S dient dem Blitz- und Rufstromschutz. Mit den Kondensatoren C1, C2 wird die Gleichspannung abgeblockt, die Widerstände R1...R4 dienen zur Strombegrenzung, damit die eine auftretende Überspannung gegen Erde ableitende Zenerdioden Z1, Z2 nicht überlastet werden. Aufgrund des empfangenen MFV-Zeichens entsteht an den Ausgangsleitungen des MfV-Empfängers ME ein bestimmtes Bitmuster. Die z.B. binär codierte Information wird in der Decodiereinrichtung DE decodiert, so daß jeweils für jedes Zeichen an einem bestimmten Ausgang ein Signal erscheint. Bei insgesamt 16 MFV-Zeichen, die durch die Sendeeinheit MZ insgesamt abzugeben sind, würde also ein solcher handelsüblicher Decodierer DE 16 Ausgänge aufweisen. Für das Ausführungsbeispiel soll gelten, daß lediglich insgesamt vier MFV-Zeichen für die Aussendung in Richtung des analogen Fernsprechendgerätes AE vorgesehen sein sollen. Entsprechend dem jeweils empfangenen Zeichen soll an einem der Ausgänge 1 bzw. 14...16 ein Ausgangssignal entstehen. Mit diesen vier Zeichen werden unterschiedliche Leuchtzustände der lichtemittierenden Dioden Led1, Led2 erzielt. Jeder der vier möglichen Leuchtkombinationen bedeutet dann vereinbarungsgemäß eine ganz bestimmte Information.

Die im Ausführungsbeispiel an einem der vier ausgewählten Ausgänge des Decodierers DE entstehenden Signale werden durch die Verknüpfungsschaltung VS derart verknüpft, daß ein Steuersignal an einem Setzeingang S bzw. einem Rücksetzeingang Rs der als Speicherschaltung dienenden bistabilen Stufe BK1 bzw. BK2 entsteht. Das Ausgangssignal einer jeden bistabilen Stufe bestimmt den Zustand der jeweils nachgeschalteten lichtemittierenden Diode Led1 bzw. Led2. Die Verknüpfungsschaltung VS ist aus den Gatterbausteinen G1...G4 aufgebaut, die jeweils eine logische ODER-Funktion ermöglichen. Durch die Kondensatoren C3, C4 bzw. C5, C6 wird verhindert, daß die bistabilen Stufen BK1 bzw. BK2 durch kurzzeitig auftretende,Spannungsspitzen fälschlicherweise gesetzt werden. Das eingangsseitig mit den Ausgängen 14 und 16 der Decodiereinrichtung DE beaufschlagte Gatter G1 ist mit seinem Ausgang mit dem Setzeingang S1 der bistabilen Stufe BK1 und das mit den Ausgangssignalen der Ausgänge 1 und 15 beaufschlagte Gatter G2 ist ausgangsseitig mit dem Rücksetzeingang Rs1 dieser bistabilen Stufe BK1 verbunden. Das mit den Ausgangssignalen der Ausgänge 1 und 14 beaufschlagte Gatter G3 ist ausgangsseitig mit dem Setzeingang S2 der bistabilen Kippstufe BK2 verbunden. Mit dem Ausgangssignal des Gatters G4, das eingangsseitig mit den Ausgängen 15 und 16 der Decodiereinrichtung DE verbunden ist, wird der Rücksetzeingang Rs1 der bistabilen Kippstufe BK2 beaufschlagt. Erscheint somit am Ausgang 1 der Decodiereinrichtung DE aufgrund eines entsprechend empfangenen Zeichens ein Signal, so wird über das Gatter G2 und dem damit erfolgenden Rücksetzen der bistabilen Kippstufe BK2 die sich vorher in einem Leuchtzustand befindende Diode Led1 ausgeschaltet und über das Gatter G3 mit dem damit erfolgenden Setzen der bistabilen Kippstufe BK2 die Diode Led2 angeschaltet. Ein aufgrund eines anderen ausgewählten Zeichens am Ausgang 14 entstehendes Signal führt dazu, daß sowohl die Diode Led1 als auch die Diode Led2 aus ihrem voraussetzungsgemäß vorhandenen Dunkelzustand in den Leuchtzustand geschaltet wird. Ein Ausgangssignal am Ausgang 15 der Decodiereinrichtung DE bewirkt, daß jede der beiden Dioden Led1 bzw. Led2 aus dem Leuchtzustand in den inaktiven Zustand gebracht werden. Ein Ausgangssignal am Ausgang 16 der Decodiereinrichtung DE führt dazu, daß die Diode Led1 aus dem voraussetzungsgemäß vorhandenen Dunkelzustand in den Leuchtzustand übergeführt wird. Durch das gleichzeitig erfolgende Rücksetzsignal für die bistabile Kippstufe BK2 wird die Diode Led2 aus einem bestehenden Leuchtzustand in den Dunkelzustand übergeführt bzw. sie bleibt weiter inaktiv. Es sind also - je nach ausgesendetem Zeichen - insgesamt vier verschiedene Zustandskombinationen für die Dioden Led1 und Led2 einstellbar. Damit können dem einzelnen Teilnehmer unterschiedliche Informationen übermittelt werden, die er dann jeweils vereinbarungsgemäß aus dem Zustand der Leuchtdioden erkennen kann. Wird z.B. ein-MFV-Signal ausgesendet, das ein Ausgangssignal am Ausgang 16 der Decodiereinrichtung DE ergeben soll, so kann mit dem damit erzielten und bereits erwähnten Zustand der Dioden Led beispielsweise die Information übermittelt wer den, daß unter der Voraussetzung eines Hotel-Fernsprechnebenstelensystems an der Rezeption eine Nachricht hinterlegt wurde. Wird diese Nachricht dort abgefragt, so kann dann die leuchtende Diode wieder inaktiv geschaltet werden, wenn durch die entsprechende Eingabe einer Information durch das damit ausgesendete Zeichen am Ausgang 15 der Decodiereinrichtung DE ein Signal erzeugt wird.

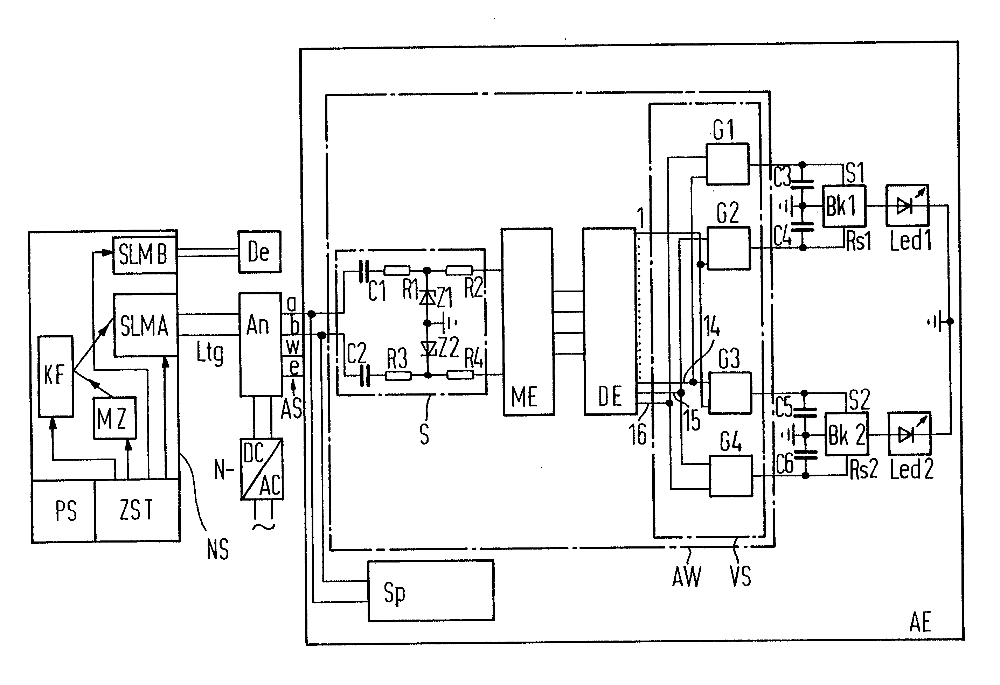

**Ansprüche**

1. Verfahren zur Erzeugung eines für die Einstelung bestimmter Zustände in einem sekundären Steuerkreis eines analogen Fernsprechendgerätes (AE) dienenden Signals, wobei das Fernsprechendgerät über eine Teilnehmeranschlußleitung (Ltg) an eine entsprechende Teilnehmeranschlußeinheit (SLMA) eines programmgesteuerten Fernsprechnebenstellensystems (NS) angeschlossen ist und durch die Programmsteuerung (PS) eine für die Bildung von auszusendenden Mehrfrequenzcode-Zeichen zentral vorgesehene Mehrfrequenzcode-Zeichensendeeinheit (MZ) aktivierbar ist, **dadurch gekennzeichnet,** daß zur Übermittlung einer Information mit vereinbarungsgemäß festgelegtem Inhalt entweder automatisch im Zusammenhang mit einer vorbestimmten vermittlungstechnischen Situation oder aufgrund der an einem Fernsprechendgerät vermittels einer bestimmten Prozedur vorgenommenen Informationseingabe durch die Programmsteuerung die kurzzeitige Anschaltung eines im Mehrfrequenzcode-Verfahren gebildeten MFV-Zeichens zur Übertragung an ein dabei ausgewähltes analoges Fernsprechendgerät (AE) unabhängig von dessen jeweiligen Betriebszustand an die ihr zugehörige Teilnehmeranschlußleitung (Ltg) veranlaßt wird, daß in diesem Fernsprechendgerät (AE) das MFV-Zeichen vermittels einer ihr zugehörigen Auswerteeinrichtung (AW) erkannt und in ein zur Ansteuerung eines sekundären sprachunabhängigen Steuerkreises (BK, Led) geeignetes Signal umgewandelt wird.

2. Verfahren nach Anspruch 1, **dadurch gekennzeichnet,** daß das in der Auswerteeinrichtung (AW) erkannte MFV-Zeichen für die Ansteuerung des im sekundären Steuerkreis vorhandenen und ein optisches Aufmerksamkeitssignal erzeugenden Leuchtelementes (Led) dient und durch die Umwandlung zumindest bis zur Einleitung der durch das Aufmerksamkeitssignal definierten Maßnahme dauerhaft zur Verfügung steht.

3. Verfahren nach Anspruch 2,
**dadurch gekennzeichnet,**
daß das dauerhaft zur Verfügung stehende Signal das Ausgangssignal einer aufgrund des empfangenen MFV-Zeichens mit einem davon abgeleiteten Ansteuersignal gesetzten bzw. rückgesetzten bistabilen Stufe (BK) darstellt.

4. Verfahren nach Anspruch 3,
**dadurch gekennzeichnet,** daß die bistabile Stufe (BK) ausgangsseitig das Leuchtelement (Led) gegebenenfalls unter Zwischenschaltung einer das Blinken des Leuchtelementes (Led) ermöglichenden Einheit steuert.

5. Verfahren nach Anspruch 2,
**dadurch gekennzeichnet,**
daß als Leuchtelement eine unmittelbar am Fernsprechendgerät installierte lichtemittierende Diode (Led) dient.

6. Verfahren nach Anspruch 2,
**dadurch gekennzeichnet,**
daß zur Übermittlung von unterschiedlichen Informationen ein ihnen jeweils zugeordnetes unterschiedliches MFV-Zeichen übertragen wird, daß jede der vorab festgelegten Informationen einen bestimmten Leucht- und/oder Blinkzustand eines Leuchtelementes (Led) bewirkt.

7. Verfahren nach Anspruch 6,
**dadurch gekennzeichnet,**
daß zur Darstellung unterschiedlicher Informationen insgesamt zwei Leuchtelemente (Led1, Led2) vorgesehen sind, denen jeweils eine bistabile Stufe (BK1, BK2) zugeordnet ist.

8. Verfahren nach den Ansprüchen 2 bis 6,
**dadurch gekennzeichnet,**
daß die Auswerteeinrichtung (AW) einen MFV-Zeichenempfänger (ME) enthält, der das empfangene Zeichen als binär codierte In formation ausgangsseitig zur Verfügung stellt, daß jede derartige Information in ein Ausgangssignal eines jedem Zeichen jeweils fest zugeordneten Ausgangs eines Decodierers (DE) umgewandelt wird, daß diese Ausgänge über Verknüpfungsglieder (G1...G4) verknüpft sind und daß deren Ausgangssignale die entsprechenden Setz- bzw. Rücksetzsignale für jede jeweils ein Leuchtelement (Led) steuernde bistabile Stufe (BK) darstellen.

9. Verfahren nach den Ansprüchen 2 bis 6,
**dadurch gekennzeichnet,**
daß die Versorgungsspannung für in der Auswerteeinrichtung (AW) und im sekundären Steuerkreis enthaltenen Baueinheiten durch ein separates Steckernetzteil (N) erzeugt wird, daß die Zuführung der Versorgungsspannung über ein zu der Anschlußschnur (AS) für das Fernsprechendgerät (AE) gehörendes Adernpaar (w, e) erfolgt.

10. Verfahren nach Anspruch 1,
**dadurch gekennzeichnet,**
daß die Teileinheiten der Auswerteeinrichtung bzw. des sekundären Steuerkreises als integrierte Bausteine ausgebildet sind.

EP 0 411 378 A2